## Europäisches Patentamt

## European Patent Office

## Office européen des brevets

(19)

(11) Veröffentlichungsnummer: **0 100 021**
A2

(12) # EUROPÄISCHE PATENTANMELDUNG

(21) Anmeldenummer: **83106807.7**

(22) Anmeldetag: **11.07.83**

(51) Int. Cl.³: **B 23 F 5/12,** B 23 D 7/10

(30) Priorität: **26.07.82 DE 3227830**

(43) Veröffentlichungstag der Anmeldung: **08.02.84**
**Patentblatt 84/6**

(84) Benannte Vertragsstaaten: **CH DE FR GB IT LI**

(71) Anmelder: **Liebherr-Verzahntechnik GmbH,**
**Postfach 1960, D-8960 Kempten (DE)**

(72) Erfinder: **Okaya, Orkan M., Dipl.-Ing., Oberm Illerfeld 16,**
**D-8960 Kempten (DE)**

(74) Vertreter: **Kador . Klunker . Schmitt-Nilson . Hirsch,**
**Corneliusstrasse 15, D-8000 München 5 (DE)**

(54) **Wälzstossmaschine.**

(57) Die Wälzstoßmaschine weist eine Hauptantriebsspindel mit einem Spindelkopf auf, der seinerseits einen einstellbaren Exzenterzapfen trägt. Dieser steuert den Werkzeughub.

Um die Einstellung der Exzentrizität des Exzenterzapfens zu erleichtern und gegebenenfalls auch durch Programmsteuerung zu ermöglichen, ist im Spindelkopf ein steuerbarer Verstellantrieb angeordnet.

Dieser wird bevorzugt durch eine Verstellwelle angesteuert, welche in der hohl ausgebildeten Hauptantriebsspindel geführt und wahlweise gemeinsam mit dieser drehbar oder relativ zu dieser verdrehbar ist.

0100021

Die Erfindung betrifft eine Wälzstoßmaschine gemäß dem Oberbegriff des Anspruchs 1.

Derartige Wälzstoßmaschinen dienen zur Bearbeitung der Flanken von Zahnrädern, Zahnstangen und dergleichen und weisen einen Stoßkopf auf, der ein den Schnitt durchführendes Stoßwerkzeug trägt und über einen Kreuzkopf oder dergleichen mit einer exzentrisch am Spindelkopf einer Hauptantriebsspindel angebrachten Anlenkung verbunden ist, welche nachfolgend kurz "Exzenterzapfen" genannt wird. Es sind im Rahmen der Erfindung aber auch andere Ausführungsformen der genannten Anlenkung möglich.

Die Exzentrizität dieses Exzenterzapfens bezüglich der Drehwelle der Hauptspindel bestimmt den Hub des Stoßkopfes.

Derartige Wälzstoßmaschinen sind teuere Präzisionsmaschinen, bei welchen Stoßwerkzeug und Werkstück in präzisester Zuordnung zueinander bewegt und geführt werden müssen. Aus diesem Grunde werden solche Maschinen meist elektronisch gesteuert. Ferner übt die Schnittgeschwindigkeit einen bedeutenden Einfluß auf die erzielte Oberflächengüte aus, so daß sie und damit die Drehzahl der Hauptspindel genau bestimmt und eingehalten werden muß. Wenn die Exzentrizität des Exzenterzapfens nun eine wesentlich größere Hubstrecke vorgibt, als sie für das jeweilige Werkstück erforderlich ist, dann benötigt diese Maschine zur Fertigung dieses Werkstückes ungebührlich lange Zeit, so daß der Nutzungswirkungsgrad der teueren Maschine unzuträglich abnimmt. Daher ist die Exzentrizität des Exzenterzapfens bezüglich der Achse der Hauptspindel einstellbar. Diese Einstellung ist jedoch nur umständlich vorzunehmen, da sich der Spindelkopf der Hauptspindel an der Oberseite der in der Regel übermannshohen Maschine befindet. Es ist für den Bedienungsmann daher zeitraubend und auch nicht ungefährlich, die Hubeinstellung vorzunehmen. Diese zeitraubende Hubein-

einstellung verschlechtert somit ebenfalls den Nutzungswirkungsgrad der Maschine. Bei der Herstellung von Blockrädern führt die aufgezeigte Problematik häufig dazu, daß auch die Verzahnung mit der kürzeren Breite mit dem Hub gestoßen wird, der für die Verzahnung größerer Breite erforderlich ist. Dies kann jedoch zu einem Überschreiben der maximalen Eingriffsgeschwindigkeit führen und damit zu einem Verbrennen der Flanken bzw. einer Beschädigung des Werkzeugs. Jedenfalls können auf diese Weise keine optimalen Schnittbedingungen eingehalten werden.

Wie bereits erwähnt, bestimmen in Zuordnung zur Drehzahl der Hauptspindel die genannte Exzentrizität letztlich die Schnittgeschwindigkeit, welche ihrerseits für die erzielte Oberflächengüte und den Schneidradverschleiß maßgeblich ist. Bereits aus diesem Grund muß die Einstellung der Exzentrizität mit großer Sorgfalt und Genauigkeit vorgenommen werden.

Elektronisch gesteuerte Maschinen sind besonders für die Bearbeitung unterschiedlicher Werkstücke und kleiner Chargen geeignet, da die jeweils erforderliche Verstellung der Maschine in dem Programm mitenthalten ist, welches den Bewegungsablauf bei der Maschine steuert. Derartige Programme konnten bisher aber den Maschinenhub nur als festen Parameter berücksichtigen. Man mußte daher bisher entweder bei Einlegen eines neuen Programmes dementsprechend von Hand den Hub genau einstellen, oder alle Programme auf eine Grundeinstellung des Hubes auslegen, welcher dann für alle Programme groß genug sein müßte.

Ein Hauptantrieb mit verstellbarer Hubhöhe etwa durch ein einstellbares Hebelgetriebe oder dergleichen kann bei einer Maschine der genannten Art nicht untergebracht werden, da einerseits wegen der geforderten, hohen Präzision ein weitgehend geschlossenes, tragendes

0100021

Maschinengehäuse erforderlich ist, und andererseits das bei Anlenkungspunkten unvermeidliche Spiel jeweils bei Lastumkehr Schwingungen induzieren könnte, welche die geforderte Fertigungsgenauigkeit beeinträchtigen können.

Ausgehend von dieser Problemlage ist es die allgemeine Aufgabe der Erfindung, den Nutzungswirkungsgrad einer Wälzstoßmaschine der genannten Art zu verbessern. Insbesondere ist es Aufgabe der Erfindung, die maschinelle Hubeinstellung bei einer derartigen Wälzstoßmaschine zu ermöglichen, wobei diese Hubeinstellung bevorzugt von einem Steuerprogramm der Maschine selbsttätig vorgenommen werden kann.

Diese Aufgabe wird erfindungsgemäß durch die Merkmale des Anspruchs 1 gelöst. Hierbei ist der Verstellantrieb zum Verstellen des Exzenterzapfens innerhalb des Spindelkopfes angebracht, der diesen Exzenterzapfen trägt. Der bisher bewährte Antrieb der Maschine durch eine Hauptspindel bleibt unverändert, so daß durch den Verstellantrieb nicht zusätzliche Störschwingungen in der Maschine induziert werden. Ferner ist keine Veränderung am Maschinengehäuse erforderlich, so daß dieses nach den Gesichtspunkten optimaler Kraftaufnahme ausgelegt werden kann.

Der Exzenterzapfen kann exzentrisch auf einer Drehscheibe angebracht sein, welche ihrerseits wiederum exzentrisch am Spindelkopf angebracht ist. Die gesteuerte Drehung dieser Drehscheibe bestimmt dann die Exzentrizität des Exzenterzapfens. Gemäß einer Ausgestaltung der Erfindung ist es aber besonders von Vorteil, daß am Spindelkopf eine geradlinige Führung vorgesehen ist, in welcher ein Schlitten läuft, der auf seiner Außenseite den Exzenterzapfen und auf seiner Innenseite eine Mutter aufweist, welche auf einer drehbaren Schraubenspindel abläuft, die im Inneren des Spindelkopfes untergebracht ist. Durch eine geteilte Führung und eine geteilte Mutter sowie Einstellschrauben läßt sich dieser Verstellantrieb mit einfachen Miteln so einstellen, daß er praktisch spielfrei und somit auch stoßfrei läuft. Außerdem kann bei Wahl einer geeigneten Gewindesteigung die Hubeinstellung jeweils in Abhängigkeit von den vollen Umdrehungen der Gewindespindel vorgenommen werden; die Ansteuerung der Hubeinstellung ist somit mit ausreichender Genauigkeit, großer Zuverlässigkeit und einfachen Mitteln möglich.

Es ist grundsätzlich möglich, im Spindelkopf selbst einen Motor anzuordnen, beispielsweise einen Elektromotor, der über Schleifkontakte mit Strom versorgt wird. Der vorzugsweise in seiner Drehrichtung umsteuerbarer Elektromotor bestimmt mittels einer übergeordneten Steuerung unmittelbar die Lage des Exzenterzapfens.

Gemäß einer Ausgestaltung der Erfindung ist es aber von Vorteil, daß die Hauptspindel als Hohlwelle ausgebildet ist und innerhalb dieser eine Verstellwelle geführt und bevorzugt auch gelagert ist, welche über ein im Spindelkopf angebrachtes Getriebe dann die Schraubenspindel ansteuert. Beim Betrieb der Maschine dreht sich diese Verstellwelle synchron mit der Hauptspindel, während beim Verstellen des Hubes eine Relativdrehung zwischen diesen beiden Wellen stattfindet. Der besondere Vorteil dieser Ausgestaltung liegt darin, daß einerseits ein mechanisch sehr steifer Verstellantrieb gebildet ist, der andererseits aber nur sehr wenig Raum im Spindelkopf einnimmt. Außerdem besteht zwischen der Lage des Exzenterzapfens und dem freien Ende der Verstellwelle stets eine eindeutige, jederzeit reversible Zuordnung; die automatische Zuordnung des Verstellantriebes ist somit zuverlässiger und mit einfacheren Mitteln möglich.

Es ist im Prinzip möglich, die Verstellwelle mit einem gesonderten Antrieb auszustatten, welcher beim Betrieb der Maschine stets die gleiche Drehzahl liefert wie der

**0100021**

Hauptantrieb der Maschine. Gemäß einer Ausgestaltung der Erfindung ist es aber von Vorteil, daß zwischen Verstellwelle und Hauptspindel eine lösbare Sperre angeordnet ist, welche deren gemeinsame Drehung bzw. Relativdrehung wahlweise gestattet.

Eine solche Sperre kann in Form eines formschlüssigen Gesperres vorliegen, welches nicht nur die gemeinsame Drehung, sondern auch die genaue Relativlage der beiden Wellen bestimmt.

Gemäß einer Ausgestaltung der Erfindung ist die lösbare Sperre aber bevorzugt als fernbetätigbare Reibungskupp- lung ausgebildet; eine solche Kupplung ist in kleinen Abmessungen herstellbar, wird im Handel bereits vertrieben und braucht somit nicht erst gesondert entwickelt zu werden und gestattet gegebenenfalls sogar die Umrüstung bereits vorhandener Maschinen. Um den unerwünschten Schlupf solcher Kupplungen auszuschalten, genügt eine ausreichende Dimensionierung.

Zum Herstellen der Relativdrehung zwischen Hauptspindel und Verstellwelle ist gemäß einer weiteren Ausgestaltung der Erfindung diese zeitweise feststellbar, während der Hauptantrieb seinerseits weiter betätigt wird. Die Feststellung kann hierbei bevorzugt durch eine Reibungskupplung erfolgen, welche zwischen der Verstellwelle und dem ortsfesten Maschinengehäuse der Wälzstoßmaschine wirksam ist. Der besondere Vorteil dieser Ausführungsform liegt darin, daß für die Hubverstellung kein eigener Antrieb erforderlich ist, sondern der bereits zur präzisen Ansteuerung eingerichtete Hauptantrieb verwendet werden kann. Die Verwendung einer Reibungskupplung weist die bereits oben beschriebenen Vorzüge auf, wobei zusätzlich noch der Gesichtspunkt maßgeblich ist, daß derartige Reibungskupplungen auch bei Abnutzung keinen Totgang erzeugen und verhältnismäßig stoßfrei einkuppel- bar sind.

- 6 -

Gemäß einer alternativen Ausgestaltung der Erfindung ist es aber auch möglich, zum Verstellen der Exzentrizität die Hauptspindel ihrerseits gegenüber dem Gehäuse der Wälzstoßmaschine festzustellen, während die Verstellspindel mittels eines gesonderten Antriebs betätigbar ist. Dieser Antrieb kann entweder beim normalen Betrieb der Maschine stets leer mitlaufen oder bevorzugt über eine Reibungskupplung eingekuppelt werden. Die Feststellung der Hauptspindel gegenüber dem Gehäuse kann alternativ auch mit dem Hauptmotor erfolgen, der die Spindel elektrisch oder mechanisch blockiert.

Die Verwendung elektrisch ansteuerbarer Reibungskupplungen ermöglicht es auf einfache Weise, den Hub-Verstellvorgang durch elektrische Impulse zu steuern und somit programmierbar zu machen.

Es ist im Prinzip möglich, daß jede Programmierung von der vorher einprogrammierten Hubeinstellung ausgeht und die Einstellung des neuen, für ein neues Programm erforderlichen Hubes von dieser Position aus vornimmt. Gemäß einer Ausgestaltung der Erfindung ist aber dem Verstellantrieb mindestens ein Lage-Meßfühler zugeordnet, welcher jeweils die tatsächliche Lage des Verstellantriebs ermittelt und von dieser Lage dann ausgehend den jeweils erforderlichen Hub einstellt. Bevorzugt ist der Lage-Meßfühler außerhalb des Spindelkopfes gegenüber der Bewegungsbahn des Exzenterzapfens derart angeordnet, daß dieser Lage-Meßfühler dann vom Exzenterzapfen oder einem diesem zugeordneten Teil (Pleuel oder dergleichen) betätigt wird, wenn der Exzenterzapfen eine definierte Lage einnimmt, bevorzugt eine Endlage mit größtem oder kleinstem Hub. Soll nun bei dieser Ausgestaltung der Erfindung der Hub verstellt werden, dann wird zunächst der Verstellantrieb derart angesteuert, daß er in die vom Lage-Meßfühler überwachte Endlage fährt. Wenn diese Endlage erreicht ist, dann wird der Verstellantrieb entsprechend umgesteuert und bewegt sich nun in gesteuerter Weise solange, bis die Umdrehung der Schraubenspindel dem angestrebten Hub entspricht. Hierbei kann die Messung der Umdrehungszahl an beliebiger Stelle des Verstellantriebes oder vorgeordneter Antriebseinheiten vorgenommen werden, da der von zwischengestalteten Elementen wie Reibungskupplungen oder dergleichen ausgeübte Fehler vernachlässigbar klein ist, weil nämlich vor jeder erneuten Hubeinstellung wieder die Justierung des Verstellantriebes in der jeweiligen End- bzw. Nullage stattfindet. Es ist somit möglich, jedem Fertigungsprogramm ein kurzes Einstellprogramm vorzuschalten, welches selbsttätig nach jedem Programmwechsel die Einstellung des Hubes genau und rasch neu einstellt.

Eine mit dem erfindungsgemäßen Verstellantrieb ausgestattete Wälzstoßmaschin kann somit jeweils mit dem optimalen Hub betrieben werden, wobei jede erneute Hubeinstellung nur so viel Zeit in Anspruch nimmt, wie es erforderlich ist, um durch Einsatz eines maschinellen Antriebs den Exzenterzapfen in seine Nullage zurückzuführen und in die erneute Sollage zu bringen.

Die Einstellung kann aber auch durch einen Bedienungsmann überwacht werden, indem beispielsweise an deutlich sichtbarer Stelle des Stoßkopfes eine Teilung und an dem den Exzenterzapfen tragenden Schlitten eine Gegenmarkierung angebracht ist, welche beide derart bemessen sind, daß der Bedienungsmann aus einiger Distanz die Einstellung zuverlässig ablesen kann. Es ist auch möglich, mittels eines elektronischen Zählers die jeweilige Hubstrecke vor Inbetriebnahme der Fertigung einzustellen und dann in den Verstellantrieb einzugeben.

In jedem dieser Fälle gestattet die Erfindung die rasche und zuverlässige Einstellung des Hubes auch von Hand, ohne daß es notwendig ist, daß der Bedienungsmann an der Maschine herumklettern muß. Es wird hierdurch nicht nur eine beträchtliche Verkürzung des Einstellvorganges erzielt, sondern auch eine ganz beträchtliche Gefahrenquelle ausgeräumt.

Der Gegenstand der Erfindung ist anhand der beigefügten, schematischen Zeichnung beispielsweise noch näher erläutert; in der Zeichnung ist in

Fig. 1 einSchnitt durch die wesentlichen Antriebsteile einer erfindungsgemäßen Wälzstoßmaschine gezeigt, und

Fig. 2 ist ein Schnitt ähnlich Fig. 1 durch ein anderes Ausführungsbeispiel einer erfindungsgemäßen Wälzstoßmaschine gezeigt.

In beiden Fig. ist der Werkzeugantrieb einer Wälzstoßmaschine gezeigt, mit einer Hauptspindel 1, die, wie an den Stellen 2 schematisch angedeutet ist, in einem Maschinengehäuse 19 steif gelagert ist.

Auf der Hauptspindel 1 sitzt drehfest ein Antriebszahnrad 3, welches mit einem Maschinen-Hauptantrieb 4 in Eingriff steht, der hier nur schematisch angedeutet ist.

Die Hauptspindel 1 trägt an ihrem einen Ende einen Spindelkopf 5, der an seiner von der Hauptspindel 1 abgewandten Seite eine Linearführung 6 in Form einer einfachen oder doppelten Schwalbenschwanzführung aufweist, deren Achse jene der Hauptspindel 1 senkrecht schneidet.

In der Führung 6 ist praktisch spielfrei verschieblich ein Schlitten 7 angebracht, welcher an seinem von der Hauptspindel 1 abgewandten Seite einen Exzenterzapfen 8 trägt, der als zylindrischer Zapfen ausgebildet ist und eine Achse aufweist, welche parallel zu jener der Hauptspindel 1 verläuft.

Jener Teil des Spindelkopfes 5, der die Führung 6 aufweist, ist als Deckel ausgebildet, um den in der Zeichnung erkennbaren Hohlraum im Spindelkopf 5 abzudecken.

Die Führung 6 bildet einen Längsschlitz, der in den genannten Hohlraum einmündet.

Durch den Längsschlitz greift ein vorspringender Arm des Schlittens 7 in das Innere des Hohlraumes ein und trägt an seinem Innenende eine Gewindebohrung, welche sich parallel zur Führung 6 erstreckt.

Außerhalb des genannten Hohlraumes ist am Exzenterzapfen 8 ein Pleuel 9 angebracht, welches einen Teil der kinematischen Verbindung zwischen dem Exzenterzapfen 8 und dem Stoßkopf (nicht gezeigt) der Wälzstoßmaschine bildet.

Im Inneren des Hohlraumes befindet sich eine Schraubenspindel 10, welche mit dem Muttergewinde im Arm des Schlittens 7 in Eingriff steht und mit ihrer Achse senkrecht jene der Hauptspindel 1 schneidet. Diese Schraubenspindel 10 ist beiderseits in den Umfangswänden des Spindelkopfes 5 gelagert und trägt am einen Ende des Hohlraumes ein Kegelrad 11, welches mit einem zweiten Kegelrad 12 in Eingriff steht, das koaxial zur Hauptspindel 1 im Inneren des Hohlraumes angebracht ist.

Wie durch einen Pfeil angedeutet, ist der Schlitten 7 durch Drehung der Gewindespindel 10 in beiden Richtungen zwischen einer Nullage, in welcher der Exzenterzapfen 8 koaxial zur Achse der Hauptspindel 1 ausgerichtet ist, und einer Maximallage verschieblich, in welcher der Schlitten 7 gegen einen Endanschlag anläuft. Vorzugsweise ist der Anschlag jedoch in der "Nullhub"-Position angeordnet, wie in der Zeichnung dargestellt.

Die Hauptspindel 1 ist als Hohlwelle ausgebildet und trägt in ihrem Inneren über Lager 14, 15 drehbar eine Verstellwelle 13, welche an ihrem einen Ende drehfest das obenerwähnte Kegelrad 12 trägt.

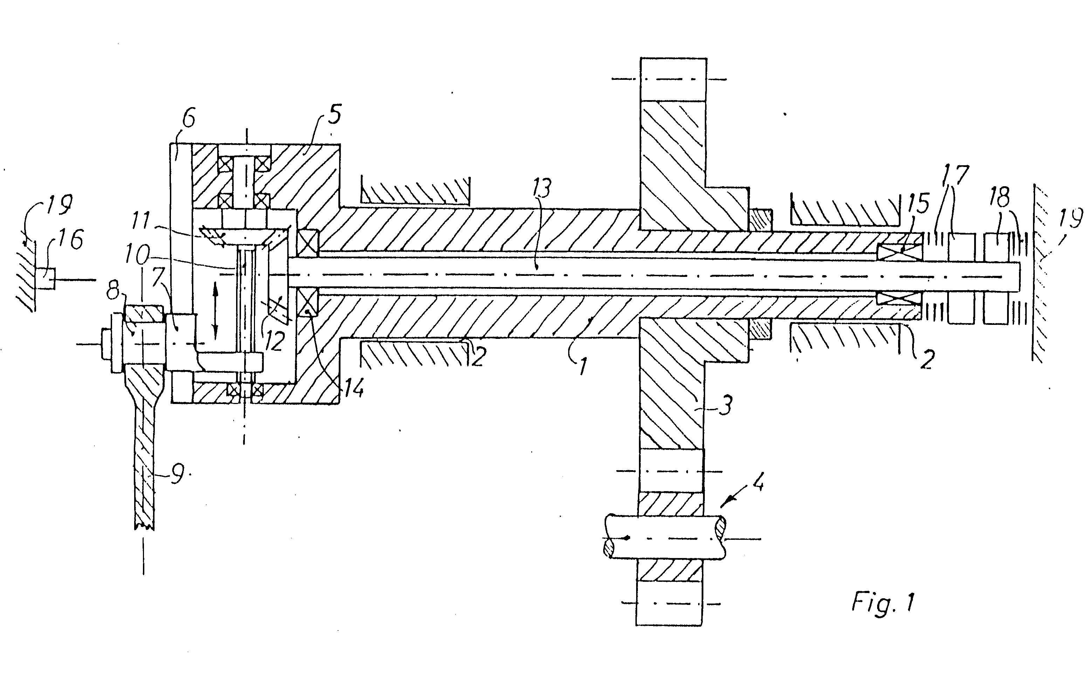

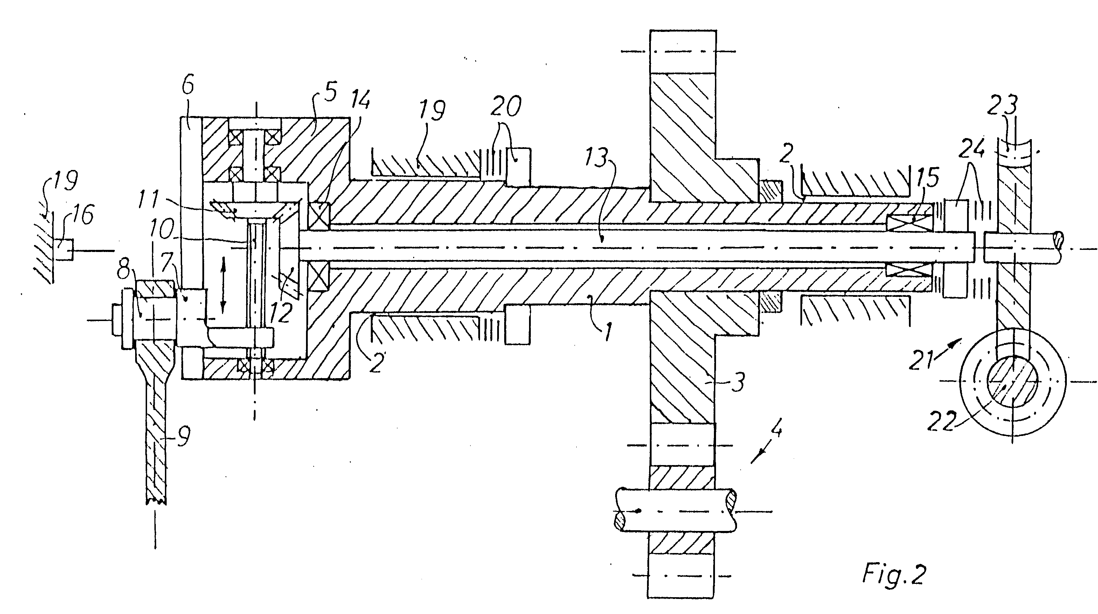

Ferner ist im Bewegungsweg des Exzenterzapfens 8 bzw. des ihn an seiner Oberseite abschließenden Teils des Pleuels 9 ein Endschalter 16 angeordnet, der seinerseits fest mit dem Maschinengestell 19 verbunden ist. Bei der Ausführungsform nach Fig. 1 ist der Endschalter vorzugsweise an der Grenze des Nullhubs angeordnet, da sich der Spindelkopf 5 während der Verstellung dreht, so daß der Exzenterzapfen in jedem Fall bei Erreichen des Nullhubes anschlägt. Bei der Ausführungsform nach Fig. 2 kann der Endschalter wahlweise Maximal- oder Nullhub anzeigen, da sich in diesem Fall der Spindelkopf 5 während der Verstellung des Exzenterzapfens 8 nicht mitdreht und sich der Exzenterzapfen immer in der richtigen Linie befindet, wenn er verstellt wird.

Während des normalen Arbeitsbetriebes der Wälzstoßmaschine findet keine Relativdrehung zwischen der Verstellwelle 13 und der Hauptspindel 1 statt, während eine solche Relativdrehung dann stattfinden muß, wenn außerhalb des normalen Betriebes die Exzentrizität des Exzenterzapfens 1 bezüglich der Achse der Hauptspindel 1 eingestellt werden soll.

Zu diesem Zweck sind in Fig. 1 zwei Kupplungen 17 und 18 vorgesehen, welche als Reibungskupplungen bzw. Bremsen ausgebildet sind und durch einen elektrischen Impuls betätigbar sind. Solche Kupplungen 17, 18 sind bevorzugt als elektromagnetische Kupplungen ausgebildet.

Von den beiden Kupplungen 17, 18 ist jeweils eine Hälfte drehfest auf der Verstellwelle 13 angebracht, während die andere Kupplungshälfte der Kupplung 17 drehfest auf dem Ende der Hauptspindel 1 angebracht ist. Dementsprechend ist auch die andere Hälfte der Kupplung 18 verdrehfest am Maschinengestell 19 angebracht.

Beide Kupplungen 17, 18 können nur alternierend betrieben werden. Wenn die Kupplung 17 eingerückt ist, d. h., die Relativdrehung zwischen der Verstellwelle 13 und der Hauptspindel 1 verhindert, dann befindet sich die gezeigte Einrichtung in der Betriebsstellung, wobei während der Drehung der Hauptspindel 1 die einmal eingestellte Exzentrizität des Exzenterzapfens 8 stets beibehalten wird.

Wird dagegen die Kupplung 17 gelöst und stattdessen die Kupplung 18 eingerückt, dann ist die Verstellwelle 13 verdrehfest mit dem Maschinengestell 19 verbunden und kann sich stattdessen bezüglich der Hauptspindel 1 drehen. Eine Verstellung der Exzentrizität des Exzenterzapfens 8 findet dann dadurch statt, daß über den Hauptantrieb 4 und das Antriebsrad 3 die Hauptspindel 1 so lange in der einen oder anderen Richtung verdreht wird, bis die gewünschte Exzentrizität eingestellt ist.

Eine andere Ausführungsform ist in Fig. 2 gezeigt: Dort sind ebenfalls zwei Kupplungen 20, 24 vorgesehen, welche in gleicher Weise wie die Kupplungen des Ausführungsbeispiels der Fig. 1 ausgebildet sind und ebenfalls nur alternierend einrückbar sind. Die Kupplung 20 ist zwischen dem Maschinengestell 19 und der Hauptspindel 1 angeordnet, während die andere Kupplung 24 doppeltwirkend ausgebildet ist und ein Kupplungsteil aufweist, welches drehfest an der Verstellwelle 13 angebracht ist; dieses eine Kupplungsteil kann wechselweise in drehfeste Verbindung entweder mit der Hauptspindel 1 oder mit einem gesonderten Stellantrieb 21 gebracht werden.

Während des normalen Betriebs der Wälzstoßmaschine ist die Kupplung 20 gelöst, und die Kupplung 24 befindet sich in jener Lage, in welcher sie eine drehfeste Verbindung zwischen der Hauptspindel 1 und der Verstellwelle 13 herstellt. In diesem Fall findet keine Relativdrehung zwischen der Hauptspindel 1 und der Verstellwelle 13 statt.

Soll nun die Exzentrizität des Exzenterzapfens 8 eingestellt werden, dann wird die Kupplung 20 eingerückt und somit die Hauptspindel 1 gegenüber dem Maschinengestell 19 fixiert. Gleichzeitig wird die Kupplung 24 in die andere Endlage versetzt, wobei sie die drehfeste

0100021

Verbindung zwischen Verstellwelle 13 und Hauptspindel 1 löst und eine drehfeste Verbindung zwischen der Verstellwelle 13 und einem Schneckenrad 23 herstellt, welches zusammen mit einer Schneckenwelle 22 den Stellantrieb 21 bildet.

Die letztgenannte Ausführungsform der Fig. 2 weist den Vorteil auf, daß das Pleuel 9 nur jene Hubbewegung ausführt, welche zum Einstellen der Exzentrizität erforderlich ist, während beim Ausführungsbeispiel der Fig. 1 dieses Pleuel 9 zusätzliche Hubbewegungen ausführt, weil zum Einstellen der Exzentrizität dort die Drehung der Hauptspindel 1 und somit auch des Spindelkopfes 5 erforderlich ist. Es ermöglicht somit die Ausführungsform der Fig. 2 das Auswechseln des Werkstückes und gegebenenfalls auch des Stoßwerkzeuges, während gleichzeitig die Exzentrizität des Exzenterzapfens 8 eingestellt wird.

In der Zeichnung ist jeweils nur ein Endschalter 16 gezeigt, welcher auf die Extremlage des Exzenterzapfens 8 anspricht. Dieser Endschalter kann aber auch an anderen Stellen angeordnet sein, insbesondere an einer Stelle, in welcher er die Nullage des Exzenterzapfens 8 anzeigt. Ferner ist es möglich, mehrere Endschalter vorzusehen. Es ist schließlich auch möglich, anstelle eines Endschalters einen anderen, geeigneten Lage-Meßfühler vorzusehen, insbesondere einen berührungsfreien Meßfühler wie etwa eine Lichtschranke oder dergleichen.

Das Maschinengehäuse 19 ist in der Zeichnung nur fragmentarisch dargestellt. Ein besonderer Vorteil der Erfindung liegt aber darin, daß dieses Maschinengehäuse aus Gründen der besseren Aussteifung derart gestaltet sein kann, daß es den Spindelkopf 5 auch an dem von der Hauptspindel 1 abgelegenen Ende abdeckt. Dieser Vorteil hat seinen Grund darin, daß der Exzenterzapfen 8 zur Einstellung seiner Exzentrizität nicht mehr zugäng-

0100021

lich zu sein braucht, da die Verstellung bevorzugt über elektronische Ansteuerung erfolgt, welche die Anzahl der Relativdrehungen zwischen Verstellwelle 13 und Hauptspindel 1 vorgibt, mißt und einstellt.

Wälzstoßmaschine

1. Wälzstoßmaschine mit einem Stoßkopf, der zum Hubantrieb mit einem Exzenterzapfen verbunden ist, welcher
zur Hubeinstellung verstellbar am Spindelkopf einer
Hauptspindel angebracht ist,
dadurch g e k e n n z e i c h n e t, daß im Spindelkopf (5) ein steuerbarer Verstellantrieb (10, 11, 12)
zur Verstellung des Exzenterzapfens (8) angebracht ist.

2. Maschine nach Anspruch 1, dadurch g e k e n n -
z e i c h n e t, daß der Exzenterzapfen (8) auf einem
Schieber (7) sitzt, der in einer geradlinigen Führung
(6) am Spindelkopf (5) verschieblich ist, und daß der
Schieber (7) eine Mutter trägt, die mit einer drehbar
im Spindelkopf (5) angebrachten Gewindespindel (10) in
Eingriff steht.

3. Maschine nach Anspruch 2, dadurch g e k e n n -
z e i c h n e t, daß eine Verstellwelle (13) innerhalb
der als Hohlwelle ausgebildeten Hauptspindel (1) angeordnet ist und über ein Getriebe (11, 12) mit der Gewindespindel (10) in Antriebseingriff steht.

4. Maschine nach Anspruch 3, dadurch g e k e n n -
z e i c h n e t, daß zwischen Verstellwelle (13) und
Hauptspindel (1) eine lösbare Sperre (17) angeordnet
ist, die wahlweise deren gemeinsame Drehung bzw.
Relativdrehung gestattet.

5. Maschine nach Anspruch 4, dadurch g e k e n n -
z e i c h n e t, daß zum Herstellen der Relativdrehung
zwischen Hauptspindel (1) und Verstellwelle (13)
letztere gegenüber dem Gehäuse (19) der Wälzstoßmaschine insbesondere durch eine fernbetätigbare
Reibungskupplung (18) feststellbar ist.

6. Maschine nach Anspruch 4, dadurch g e k e n n -

z e i c h n e t, daß zur Ermöglichung einer Relativdrehung zwischen Hauptspindel (1) und Verstellwelle
(13) erstere durch den Hauptmotor elektrisch oder
mechanisch gebremst werden kann.

7.   Maschine nach Anspruch 4, dadurch g e k e n n -
z e i c h n e t, daß die Hauptspindel (1) gegenüber
dem Gehäuse (19) der Wälzstoßmaschine insbesondere
durch eine fernbetätigbare Reibungskupplung (20) feststellbar ist, und daß mit der Verstellwelle (13) ein
gesonderter Antrieb (21) insbesondere durch eine fernbetätigbare Reibungskupplung (24) verbunden ist.

8.   Maschine nach einem der Ansprüche 1 bis 7, dadurch
g e k e n n z e i c h n e t, daß zwischen dem
Exzenterzapfen (8) und dem Gehäuse (19) der Wälzstoßmaschine mindestens ein Lage-Meßfühler (16) angeordnet
ist.

9.   Maschine nach einem der Ansprüche 1 bis 8, dadurch
g e k e n n z e i c h n e t, daß die Hubverstellung
programmgesteuert und automatisch zwischen der Bearbeitung von Verzahnungen unterschiedlicher Breite erfolgt.

0100021

Fig. 1

Fig.2

0100021